Europäisches Patentamt

European Patent Office

Office européen des brevets

(19)

(11) Veröffentlichungsnummer: **0 271 769**
**B1**

(12) **EUROPÄISCHE PATENTSCHRIFT**

(45) Veröffentlichungstag der Patentschrift: **16.01.91**

(21) Anmeldenummer: **87117802.6**

(22) Anmeldetag: **02.12.87**

(51) Int. Cl.⁵: **H 01 J 41/06, G 01 L 21/34**

(54) **Penning-Ionisationsvakuummeter.**

(30) Priorität: **13.12.86 DE 3642670**

(43) Veröffentlichungstag der Anmeldung:
**22.06.88 Patentblatt 88/25**

(45) Bekanntmachung des Hinweises auf die
Patenterteilung:
**16.01.91 Patentblatt 91/03**

(84) Benannte Vertragsstaaten:
**CH DE FR GB IT LI NL**

(56) Entgegenhaltungen:
**DE-A-2 945 925**
**DE-A-3 047 744**
**DE-A-3 347 176**

(73) Patentinhaber: **LEYBOLD
AKTIENGESELLSCHAFT
Bonner Strasse 498
D-5000 Köln 51 (DE)**

(72) Erfinder: **Limp, Hans
Verstorben (DE)**

(74) Vertreter: **Leineweber, Jürgen, Dipl.-Phys.
Nagelschmiedshütte 8
D-5000 Köln 40 (DE)**

**Die Akte enthält technische Angaben, die nach
dem Eingang der Anmeldung eingereicht
wurden und die nicht in dieser Patentschrift
enthalten sind.**

Courier Press, Leamington Spa, England.

**Beschreibung**

Die Erfindung bezieht sich auf ein Penning-Ionisationsvakuummeter mit einem Meß-elektrodensystem, das eine Anode und mindestens eine Kathode umfaßt, welche im Magnetfeld eines Permanentmagnetsystems angeordnet sind, und das mit einer Zündhilfe ausgerüstet ist.

Die Penning-Ionisationsvakuummeter gehören zu den Ionisationsvakuummetern, die mit kalter Entladung arbeiten. Sie weisen zwei unbeheizte Elektroden (Kathode und Anode) auf, zwischen denen mittels einer Gleichspannung in der Größenordnung von 2 kV eine kalte Entladung gezündet und aufrechterhalten wird. Mit Hilfe eines Magnetfeldes wird der Weg der Elektronen verlängert, so daß ihre Stoßrate mit Gasmolekülen ausreichend groß ist, um die zur Aufrechterhaltung der Entladung—auch bei sehr tiefen Drücken—erforderliche Anzahl von Ladungsträgern zu bilden. Die positiven und negativen Ladungsträger wandern zu den entsprechenden Elektroden und bilden den druckabhängigen Entladungsstrom, der auf einer Meßskala angezeigt wird. Nachteilig an Vakuummetern dieser Art ist, daß die Entladung nicht immer gezündet werden kann.

Aus der DE—OS 30 47 744 ist ein Ionisationsvakuummeter der eingangs genannten Art bekannt. Zur Erzielung einer sicheren Zündung wird vorgeschlagen, neben dem aus unbeheizten Elektroden bestehenden Meßsystem eine zusätzliche Glühkathode vorzusehen. Diese Maßnahme erfordert die Zuführung eines ausreichend großen Stromes, macht also eine zusätzliche Stromversorgungseinrichtung notwendig.

Weitere Vorschläge zur Erzielung einer sicheren Zündung sind aus der deutschen Patentanmeldung S 23 166 vom 28.08.1952 bekannt. Sie bestehen darin, innerhalb der Meßröhre ein radioaktives Pärparat vorzusehen oder eine Metallspitze in den Entladungsraum hineinragen zu lassen. Diese Vorschläge haben entweder nicht den gewünschten Erfolg gehabt (Metallspitze) oder sind aus Strahlungsschutzgründen bedenklich (radioaktives Präparat).

Der vorliegenden Erfindung liegt die Aufgabe zugrunde, ein Ionisationsvakuummeter der eingangs genannten Art mit einer einfachen und sicheren Zündhilfe auszurüsten.

Erfindungsgemäß wird diese Aufgabe dadurch gelöst, daß innerhalb des Magnetfeldes des Permanentmagnetsystems ein weiteres, mit Anode und mindestens einer Kathode ausgerüstetes Penning-System als Zündsystem angeordnet ist, dessen Abmessungen wesentlich kleiner sind als die Abmessungen des Penning-Meßsystems. Infolge der sehr kleinen Abmessungen ist ein Zünden des zusätzlichen Penning-Systems selbst bei sehr tiefen Drücken sichergestellt. Unmittelbar nach dem Zünden des Zündsystems gelangen einige Ladungsträger in den Bereich des Meßsystems, so daß das Zünden des Meßsystems störende Zündverzüge nicht eintreten.

Zweckmäßigerweise sind die beiden Anoden des Meß- bzw. Zündsystems als Ringanoden ausgebildet und mit parallel zueinander liegenden Achsen angeordnet. Der Durchmesser der Ringanode des Zündsystems ist dabei um mindestens den Faktor vier kleiner als der Durchmesser der Ringanode des Meßsystems. Beide Anoden können mit der gleichen Spannung versorgt werden, so daß zusätzliche Stromversorgungseinrichtungen nicht erforderlich sind. Besonders vorteilhaft ist es, wenn die Anode des Zündsystems von der Anode des Meßsystems getragen wird.

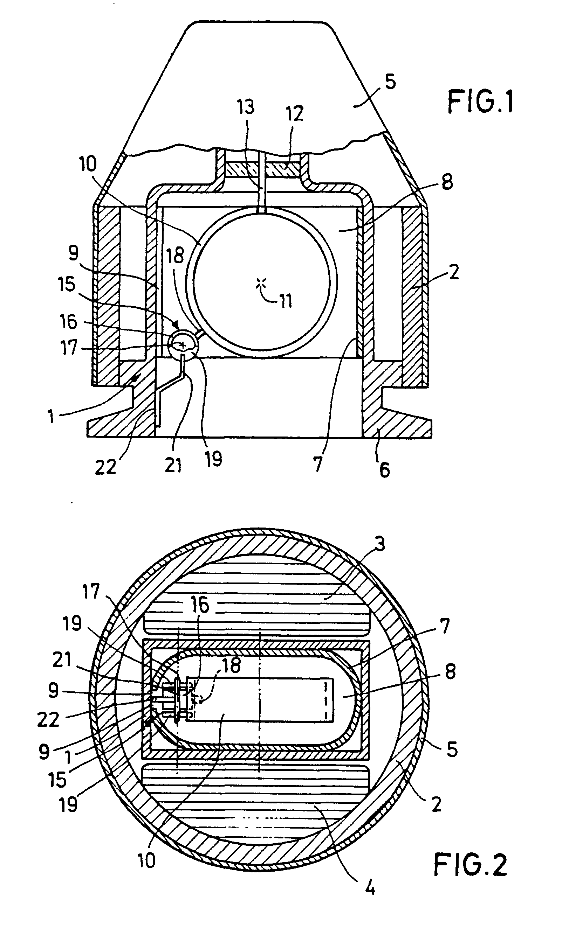

Weitere Vorteile und Einzelheiten der Erfindung sollen anhand eines in den Figuren 1 und 2 dargestellten Ausführungsbeispieles erläutert werden.

Das teilweise im Längsschnitt (Fig. 1) und im Querschnitt (Fig. 2) dargestellte Penning-Ionisationsvakuummeter weist ein vakuumdichtes Gehäuse 1 auf, das von einem Stahlring 2 umgeben ist. Innerhalb des Stahlringes sind die Permanentmagneten 3 und 4 angeordnet. Jeweils ein Nordpol und ein Südpol sind dem Gehäuse 1 zugewandt und erzeugen das gewünschte magnetische Feld. Des gesamte System ist mittels einer Schutzkappe 5 abgedeckt.

Das Gehäuse 1 ist mit einem Flansch 6 ausgerüstet, mit dem das Ionisationsvakuummeter an einen Rezipienten angeschlossen wird, in dem der Druck gemessen und/oder überwacht werden soll.

Innerhalb des Gehäuses 1 befindet sich die Kathode 7, die als auswechselbares Kathodenblech ausgebildet ist. Es besteht auch die Möglichkeit, daß das Gehäuse 1 selbst die Kathode bildet. Da aber die in der Entladung erzeugten Ionen auf die Kathode beschleunigt werden und dort eine Zerstäubung des Kathodenmaterials hervorrufen, ist es zweckmäßiger, ein auswechselbares Kathodenblech vorzusehen. Die Anordnung des gebogenen Kathodenblechs 7 in dem im Querschnitt rechteckig gestalteten Elektrodenraum 8 ist so getroffen, daß sich die in einem Abstand von wenigen Millimetern gegenüberliegenden Stirnseiten 9 des Kathodenblechs 7 im Bereich einer Schmalseite des Elektrodenraumes 8 befinden.

Innerhalb des von der Kathode 7 gebildeten Raumes befindet sich die ringförmige Anode 10, deren Achse mit 11 bezeichnet ist. Mittels der Druckglas-Einschmelzung 12 und der Anodenzuführung 13 ist die Anode 10 im Elektrodenraum 8 gehalten. Die Anordenzuführung liegt auf einem positiven Hochspannungspotential (ca. 2 kV). Das Kathodenblech 7 liegt dem geerdeten Gehäuse 6 an. Zwischen diesen beiden Elektroden wird während des Betriebs des Gerätes die Entladung aufrechterhalten.

Das erfindungsgemäße Zündsystem ist mit 15 bezeichnet und befindet sich—neben der Anode 10 des Meßsystems—ebenfalls im Magnetfeld zwischen den Polen 3 und 4. Als positive Elektrode ist ebenfalls eine Ringanode 16 vorgesehen, deren Durchmesser wesentlich kleiner ist als der Durchmesser der Ringanode 10 des Meßsystems (vorzugsweise um etwa den Faktor vier) und deren Achse 17 parallel zur Achse 11 der Ringanode 10 liegt. Die Breite der Ringanode 16 ist um etwa den Faktor zwei kleiner als die Breite der Ringanode 10. Mittels eines metallischen Stiftes 18 ist die Anode 16 des Zündsystems 15 auf der Anode 10 des Maßsystems gehalten, so daß beide Ringanoden die gleich Spannung annehmen.

Als Kathoden des Zündsystems 15 dienen zwei kreisförmige Metallscheiben 19, deren Durchmesser gleich oder etwas größer ist als der Durchmesser der Ringanode 16. Die Kathoden 19 sind den Stirnseiten der Ringanode 16 zugeordnet und werden mittels einer gabelförmigen Halterung 21 in dieser Lage fixiert. Diese Halterung 21 ist am Gehäuse 1 elektrisch leitend befestigt (z. B. verlötet), so daß die Kathoden 19 Erdpotential annehmen. Zweckmäßigerweise liegt der Befestigungsort 22 an einer Schmalseite des Entladungsraumes 8, so daß das Einführen und/oder Auswechseln des Kathodenblechs 7 nicht behindert ist.

Infolge der wesentlich kleineren Dimensionen des Zündsystems 15, das mit den gleichen Spannungen versorgt ist wie das Meßsystem, ist zunächst eine sichere Zündung des Zündsystems —selbst bei tiefsten Drücken—gewährleistet. Unmittelbar nach dem Zünden des Zündsystems 15 gelangen Ladungsträger in den Bereich des Meßsystems, so daß auch dieses ohne störende Verzögerung zündet.

## Patentansprüche

1. Penning-Ionisationsvakuummeter mit einem Meßelektrodensystem, das eine Anode (10) und eine Kathode (7) umfaßt, welche im Magnetfeld eines Permanentmagnetsystems (2, 3, 4) angeordnet sind, und das mit einer Zündhilfe ausgerüstet ist, dadurch gekennzeichnet, daß in dem Magnetfeld des Permanentmagnetsystems (2, 3, 4) ein weiteres mit einer Anode (16) und mindestens einer Kathode (19) ausgerüstetes Penning-System als Zündsystem (15) angeordnet ist, dessen Abmessungen wesentlich kleiner sind als die Abmessungen des Penning-Meßsystems (7, 10).

2. Ionisationsvakuummeter nach Anspruch 1, dadurch gekennzeichnet, daß die beiden Anoden (10, 16) des Meß- bzw. Zündsystems als Ringanoden ausgebildet und mit parallel zueinander liegenden Achsen (11, 17) angeordnet sind.

3. Ionisationsvakuummeter nach Anspruch 2, dadurch gekennzeichnet, daß der Durchmesser der Ringanode (16) des Zündsystems (15) um mindestens den Faktor vier kleiner ist als der Durchmesser der Ringanode (10) des Meßsystems.

4. Ionisationsvakuummeter nach Anspruch 2 oder 3, dadurch gekennzeichnet, daß die Breite der Ringanode (16) des Zündsystems (15) um etwa den Faktor zwei kleiner ist als die Breite der Ringanode (10) des Meßsystems.

5. Ionisationsvakuummeter nach einem der vorhergehenden Ansprüche, dadurch gekennzeichnet, daß die Anode (10) des Meßsystems die Anode (16) des Zündsystems (15) mittels einer elektrisch leitenden Verbindung trägt.

6. Ionisationsvakuummeter nach einem der vorhergehenden Ansprüche, dadurch gekennzeichnet, daß das Zündsystem (15) zwei Kathoden (19) aufweist, die mittels einer gabelförmigen Halterung (21) am Gehäuse (1) des Ionisationsvakuummeters befestigt sind.

7. Ionisationsvakuummeter nach Anspruch 6, dadurch gekennzeichnet, daß der Entladungsraum (8), in dem sich das Meßsystem und das Zündsystem (15) befinden, im Querschnitt annähernd rechteckförmig gestaltet ist und daß der Befestigungsort (22) der gabelförmigen Halterung (21) für die Kathoden (19) des Zündsystems (15) im Bereich einer Schmalseite des Entladungsraumes (8) angeordnet ist.

## Revendications

1. Instrument de mesure du vide à ionisation de Penning comprenant un système d'électrodes de mesure qui comprend une anode (10) et une cathode (7) qui sont disposées dans le champ magnétique d'un système d'aimants permanents (2, 3, 4) et qui est équipée d'un dispositif auxiliaire d'amorçage, caractérisé en ce que, dans le champ magnétique du système d'aimants permanent (2, 3, 4), est agencé en qualité de système d'amorçage (15) un système de Penning supplémentaire, équipé d'une anode (16) et d'au moins une cathode (19) et, dont les dimensions sont sensiblement plus petites que celles du système de Penning de mesure (7, 10).

2. Instrument de mesure du vide à ionisation selon la revendication 1, caractérisé en ce que les deux anodes (10, 16) du système de mesure et du système d'amorçage sont consituées par des anodes annulaires et disposées avec leurs axes (11, 17) parallèles entre eux.

3. Instrument de mesure du vide à ionisation selon la revendication 2, caractérisé en ce que la diamètre de l'anode annulaire (16) du système d'amorçage (15) est au moins quatre fois plus petit que celui de l'anode annulaire (10) du système de mesure.

4. Instrument de mesure du vide à ionisation selon la revendication 2 ou 3, caractérisé en ce que la largeur de l'anode annulaire (16) du système d'amorçage (15) est à peu près deux fois plus petite que la largeur de l'anode annulaire (10) du système de mesure.

5. Instrument de mesure du vide à ionisation selon une des revendications précédentes, caractérisé en ce que l'anode (10) du système de mesure porte l'anode (16) du système d'amorçage à l'aide d'une liaison conductrice de l'électricité.

6. Instrument de mesure du vide à ionisation selon une des revendications précédentes, caractérisé en ce que le système d'amorçage (15) présente deux cathodes (19) qui sont fixées au boîtier (1) de l'instrument de mesure du vide à ionisation à l'aide d'une monture (21) en forme de fourche.

7. Instrument de mesure du vide à ionisation selon la revendication 6, caractérisé en ce que la chambre de décharge (8) dans laquelle se trouvent le système de mesure et le système d'amorçage (15) est en section d'une configuration à peu près rectangulaire et en ce que le point de fixation (22) de la monture (21) en forme de fourche qui porte les cathodes (19) du système d'amorçage (15) est disposé dans la région d'un petit côté de la chambre de décharge (8).

**Claims**

1. Penning-type ionisation vacuum meter having a measuring electrode system which comprises an anode (10) and a cathode (7) disposed in the magnetic field of a permanent magnet system (2, 3, 4) and is fitted with a triggering aid, characterised in that there is disposed as a triggering system (15) in the magnetic field of the permanent magnet system (2, 3, 4) a further Penning-type system which is equipped with an anode (16) and at least one cathode (19) and whose dimensions are substantially smaller than the dimensions of the Penning-type measuring system (7, 10).

2. Ionisation vacuum meter according to claim 1, characterised in that the two anodes (10, 16) of the measuring and triggering system are annular anodes and are disposed with their axes (11, 17) parallel to one another.

3. Ionisation vacuum meter according to claim 2, characterised in that the diameter of the annular anode (16) of the triggering system (15) is at least four times smaller than the diameter of the annular anode (10) of the measuring system.

4. Ionisation vacuum meter according to claim 2 or 3, characterised in that the width of the annular anode (16) of the triggering system (15) is approximately two times smaller than the width of the annular anode (10) of the measuring system.

5. Ionisation vacuum meter according to one of the preceding claims, characterised in that the anode (10) of the measuring system carries the anode (16) of the triggering system (15) by means of an electrically conductive connection.

6. Ionisation vacuum meter according to one of the preceding claims, characterised in that the triggering system (15) has two cathodes (19) which are fastened on the housing (1) of the ionisation vacuum meter by means of a fork-like holding device (21).

7. Ionisation vacuum meter according to claim 6, characterised in that the discharge chamber (8), in which the measuring system and the triggering system (15) are located, is approximately rectangular in cross-section, and that the fastening point (22) of the fork-like holding device (21) for the cathodes (19) of the triggering system (15) is disposed in the region of a narrow side of the discharge chamber (8).

FIG.1

FIG.2